# EUROPÄISCHE PATENTSCHRIFT

(11) **EP 1 303 427 B1**
(45) Veröffentlichungstag und Bekanntmachung des Hinweises auf die Patenterteilung: **23.06.2004**
(21) Anmeldenummer: 01953877.6
(22) Anmeldetag: 12.07.2001
(51) Int. Cl.: B60R 21/01

(54) **VERFAHREN ZUM ERMITTELN DER SCHWERE EINES FRONTAUFPRALLS**
METHOD FOR DETERMINING THE SEVERITY OF A FRONTAL IMPACT
PROCEDE DE DETERMINATION DE LA FORCE D'UN IMPACT FRONTAL

(30) Priorität: 12.07.2000 DE 10033907
(43) Veröffentlichungstag der Anmeldung: 23.04.2003
(73) Patentinhaber: ROBERT BOSCH GMBH, 70442 Stuttgart (DE)
(72) Erfinder: ROELLEKE, Michael, 71229 Leonberg-Hoefingen (DE)
(86) Internationale Anmeldenummer: PCT/DE2001/002536
(87) Internationale Veröffentlichungsnummer: WO 2002/004258

(56) Entgegenhaltungen:
- DE-A- 2 123 359
- DE-A- 3 924 507
- DE-A- 19 816 989
- DE-A- 19 955 559
- GB-A- 2 293 681

## Beschreibung

### Stand der Technik

Die vorliegende Erfindung betrifft ein Verfahren zum Ermitteln der Schwere eines Frontaufpralls bei einem Fahrzeug, wobei im Frontbereich des Fahrzeugs mindestens ein Frontsensor installiert ist, der eine durch einen. Aufprall entstehende Verzögerung mißt, aus der eine Information über die Aufprallschwere abgeleitet wird.

Aus der GB 2 293 681 A ist es bekannt, dass neben einer zentral im Fahrzeug angeordneten Beschleunigungssensorik auch ein oder mehrere Frontsensoren vorhanden sind, deren in der Knautschzone im Frontbereich des Fahrzeugs gemessene Beschleunigungssignale bei einer Auslöseentscheidung für Rückhalteeinrichtungen (z. B. Airbags, Gurtstraffer, etc.) berücksichtigt werden. Mit Hilfe der im Frontbereich des Fahrzeugs bei einem Aufprall gemessenen Beschleunigung läßt sich eine Information über die Aufprallschwere bestimmen. Mit einer solchen Information über die Aufprallschwere, die allein mit einer zentralen Beschleunigungssensorik nicht gewonnen werden kann, lassen sich Fehlauslösungen weitgehend reduzieren und eine sehr gute Anpassung der Auslöseeigenschaften von Rückhaltesystemen an die Aufprallschwere erzielen. Gemäß der zitierten Druckschrift GB 2 293 681 A wird die vom Frontsensor gemessene Beschleunigung integriert und der Integralwert mit einer festen Schwelle verglichen. Übersteigt der Integralwert diese feste Schwelle, bedeutet das, dass ein Aufprall von einer gewissen Schwere vorliegt. Aus der Druckschrift geht nicht hervor, wie graduell zwischen mehreren unterschiedlichen Aufprallschweren unterschieden werden kann.

Aus DE 198 16 989 A1 ist ein Verfahren zur Beurteilung der Crashschwere bekannt. Dabei wird ein Geschwindigkeitssignal, das aus einem Beschleunigungssignal eines Beschleunigungssensors integriert wurde, mit verschiedenen Schwellwerten verglichen, um die Crashschwere zu bestimmen. Die Schwellwerte sind Geraden.

Der Erfindung liegt daher die Aufgabe zugrunde, ein Verfahren der eingangs genannten Art anzugeben, mit dem es möglich ist, auf einfache Art und Weise zwischen mehreren unterschiedlichen Aufprallschweren differenzieren zu können.

### Vorteile der Erfindung

Die genannte Aufgabe wird mit den Merkmalen des Anspruchs 1 dadurch gelöst, dass die von mindestens einem Frontsensor gemessene Verzögerung oder die daraus durch Integration hergeleitete Geschwindigkeit mit einer Grundschwelle verglichen wird, welche einen solchen Verlauf hat, dass sie von einer gemessenen Verzögerung/Geschwindigkeit nicht überschritten wird, die bei einem Aufprall mit einer solchen Schwere gemessen wird, bei der die Rückhaltemittel im Fahrzeug gerade noch nicht ausgelöst werden sollen. Es wird mindestens eine weitere Schwelle mit einer größeren Steigung als die der Grundschwelle gebildet, wobei diese weitere Schwelle mit größerer Steigung dort von der Grundschwelle abzweigt, wo die Grundschwelle von der gemessenen Verzögerung/Geschwindigkeit überschritten wird. Dabei wird die Steigung der mindestens einen weiteren Schwelle so gewählt, dass sie von der gemessenen

Verzögerung/Geschwindigkeit erst bei einer bestimmten Aufprallschwere überschritten wird.

Durch den erfindungsgemäßen Vergleich der vom Frontsensor gemessenen Verzögerung/Geschwindigkeit.mit mehreren Schwellen unterschiedlicher Steigungen kann sehr genau zwischen verschiedenen Aufprallschweren unterschieden werden. Dementsprechend ist es möglich, die Auslösung von Rückhalteeinrichtungen im Fahrzeug an die jeweils gegebene Aufprallschwere anzupassen. Die Anpassung kann z. B. bezüglich der Aufblasgeschwindigkeit von Airbags bzw. des Aufblasgrades oder der Wahl der Aufblasstufen der Airbags geschehen. Eine genauere Differenzierung zwischen verschiedenen Aufprallschweren wird auch dadurch möglich, dass die Schwellen nicht einfach zeitlich konstante Werte sind, sondern dass sie unterschiedliche zeitabhängige Steigungen aufweisen.

Vorteilhafte Weiterbildungen der Erfindung gehen aus den Unteransprüchen hervor.

Es ist zweckmäßig, so viele Schwellen mit unterschiedlichen Steigungen bereitzustellen, wie verschiedene Aufprallschweren voneinander unterschieden werden sollen.

Eine sehr einfache Realisierung der Schwellen ergibt sich dadurch, dass die Grundschwelle sowie jede weitere Schwelle ihren zeitlichen Verlauf zu Beginn eines Aufpralls mit demselben konstanten Minimalwert beginnen und nach einer Zeitverzögerung, vorgegeben durch die jeweils zu ermittelnde Aufprallschwere, auf einen individuellen Maximalwert mit einer individuellen Steigung übergehen.

Um bei den Schwellwertentscheidungen mit möglichst geringer Rechnerleistung auskommen zu können, ist es zweckmäßig, dass die einzelnen Schwellen vom Minimalwert auf ihren Maximalwert in einem gestuften Steigungsverlauf übergehen.

### Zeichnung

Anhand eines in der Zeichnung dargestellten Ausführungsbeispiels wird nachfolgen die Erfindung näher erläutert. Es zeigen:
Figur 1 den Frontbereich eines Fahrzeugs mit einem darin angeordneten Frontsensor,
Figur 2 mehrere Verläufe von gemessenen Verzögerungen bzw. Geschwindigkeiten und Schwellwertverläufe und
Figur 3 ein Ablaufdiagramm zur Bestimmung der Aufprallschwere.

### Beschreibung eines Ausführungsbeispiels

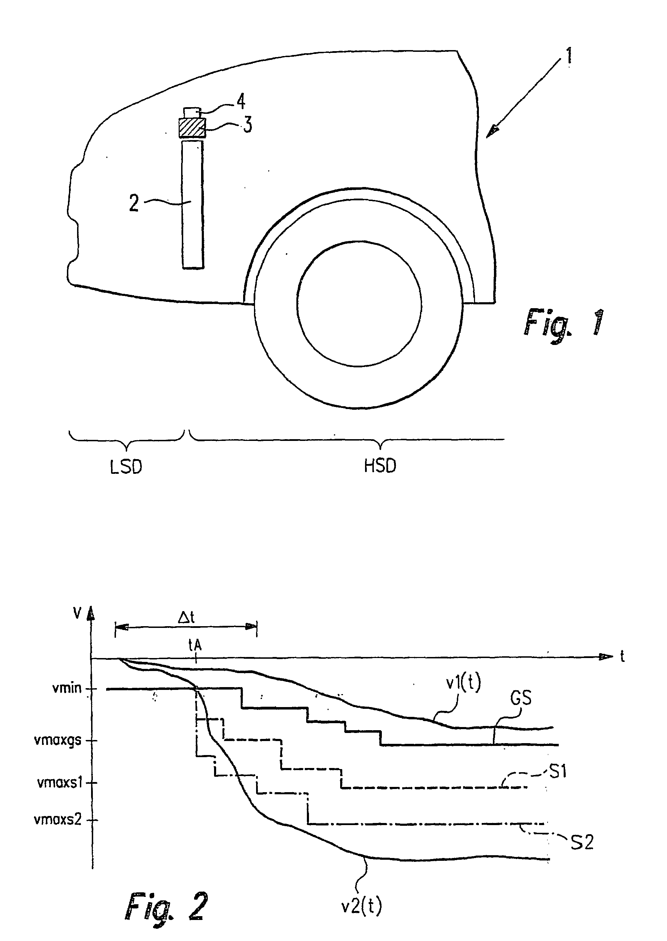

In der Figur 1 ist schematisch der Frontbereich 1 eines Fahrzeugs in einer Seitenansicht dargestellt. Angedeutet ist darin der Motorkühler 2 und ein darüber angeordneter Querträger 3, der als Kühlerbrücke dient. Der Bereich vor dem Kühler 2 und der Kühlerbrücke 3 des Fahrzeugs, der in der Zeichnung mit LSD bezeichnet ist, wird bereits bei einer relativ geringen Aufprallgeschwindigkeit deformiert. Bei dieser Aufprallgeschwindigkeit sollen zwar Gurtstraffer schon auslösen, Airbags aber noch nicht. Der Bereich HSD, hinter dem Kühler 2, besitzt eine stabilere Struktur und wird nur bei Aufprallen mit höherer Geschwindigkeit (z. B. ab ca. 25 km/h) deformiert. Am Ende der vorderen Zone LSD, die bereits bei geringerer Aufprallgeschwindigkeit deformiert wird, befindet sich ein Frontsensor 4, der vorzugsweise am Querträger 3 oberhalb des Kühlers 2 installiert ist. Dadurch sensiert dieser Frontsensor 4 erst dann eine nennenswerte Verzögerung, wenn die Aufprallschwere so groß ist, dass die Aufprallenergie nicht mehr durch die vordere "weiche" Zone LSD aufgefangen wird. Erst bei größerer Aufprallschwere, die Auswirkungen auf die zweite "härtere" Zone HSD hat, reagiert der Frontsensor 4 mit einem Anstieg des von ihm gemessenen Verzögerungssignals. Der Signalanstieg geschieht durch den direkten Kontakt des Sensors mit der in das Fahrzeug eindringenden Barriere bzw. mit der durch die Barriere zusammengedrückten festen Struktur.

Statt nur eines Frontsensors können auch mehrere Frontsensoren eingesetzt werden, wenn detailliertere Informationen über einen Aufprall ermittelt werden sollen. Im Folgenden wird der Einfachheit halber aber immer nur von einem Frontsensor 4 gesprochen.

In der Figur 2 sind beispielhaft zwei zeitliche Verläufe von Geschwindigkeitssignalen v1 (t) und v2(t) dargestellt, welche sich durch Integration der vom Frontsensor 4 gemessenen Beschleunigungen bzw. Verzögerungen bei Aufprallen verschiedener Schwere ergeben. Das Geschwindigkeitssignal v1(t) resultiert aus einem Aufprall geringerer Schwere (geringerer Aufprallgeschwindigkeit) und zeigt, dass vom Beginn des Aufpralls eine Verzögerungszeit Δt vergeht bis das Geschwindigkeitssignal v1(t) überhaupt eine signifikante Änderung seiner Steigung erfährt. Die Verzögerungszeit Δt erklärt sich damit, dass in dieser Zeit die Deformation der vorderen weichen Zone LSD erfolgt und erst dann bei Einwirkung auf die nachfolgende härtere Zone HSD der Frontsensor 4 eine Verzögerung bzw. eine Geschwindigkeitsänderung erfährt. Bei höherer Aufprallschwere entsteht das Geschwindigkeitssignal v2(t) . Hier ist die Verzögerungszeit, in der der Frontsensor 4 noch kaum eine Reaktion zeigt, erheblich kürzer und die anschließende Steigung des Signals v2(t) erheblich größer als bei dem Signal v1 (t) bei geringerer Aufprallschwere. Man kann also festhalten, dass je größer die Aufprallschwere ist, desto kleiner ist die anfängliche Verzögerungszeit Δt und desto größer ist die anschließende Steigung des Geschwindigkeitssignals. Es gilt weiterhin, dass die anfängliche Verzögerungszeit Δt um so geringer und die anschließende Steigung des Geschwindigkeitsverlaufs um so größer ist, je härter die Barriere bei einer festen Aufprallgeschwindigkeit bzw. je größer die Aufprallgeschwindigkeit bei einer festen Barriere ist.

Es soll nun aus dem Ausgangssignal des Frontsensors 4 hergeleitet werden, welchen Schweregrad ein Aufprall hat, um mit dieser Information in einem zentralen Steuergerät die Auslöseeigenschaften von Rückhalteeinrichtungen im Fahrzeug optimal an den vorliegenden Aufprallschweregrad anpassen zu können. Zur Einstufung der vom Frontsensor 4 gemessenen Verzögerung bzw. der daraus durch Integration hergeleiteten Geschwindigkeit v in verschiedene Aufprallschweregrade werden Schwellwertentscheidungen durchgeführt. Zu diesem Zweck sind, wie in der Figur 2 dargestellt, mehrere Schwellen GS, S1 und S2 vorgegeben. Diese Schwellen GS, S1, S2 beziehen sich auf die Geschwindigkeit v, die durch Integration der vom Frontsensor 4 gemessenen Verzögerung hervorgeht. Die Schwellwertentscheidung könnte aber auch mit der vom Frontsensor gemessenen Verzögerung durchgeführt werden.

Alle Schwellen GS, S1 und S2 beginnen mit der gleichen gemeinsamen minimalen Geschwindigkeit vmin. Sie gehen dann mit unterschiedlichen Steigungen auf Maximalwerte vmaxgs, vmaxs1, vmaxs2 der Geschwindigkeit über. Es gibt eine Grundschwelle GS, deren Maximalwert vmaxgs ist. Diese Grundschwelle GS hat die geringste Steigung zwischen der minimalen Geschwindigkeit vmin und maximalen Geschwindigkeit vmaxgs. Der Verlauf der Grundschwelle ist so gewählt, dass sie von einer Geschwindigkeit nicht überschritten wird, die bei einem Aufprall mit einer solchen Schwere gemessen wird, bei der die Rückhaltemittel im Fahrzeug gerade noch nicht ausgelöst werden sollen. Die beiden anderen Schwellen S1 und S2 gehen mit verschieden starken Steigungen auf Maximalwerte vmaxs1 und vmaxs2 über. Die Steigungen und die Maximalwerte vmaxs1 und vmaxs2 der beiden Schwellen S1 und S2 sind so gewählt, dass bei Überschreiten der Schwelle S1 durch den Geschwindigkeitsverlauf v(t) eine mittlere Aufprallschwere und bei Überschreiten der Schwelle S2 durch den Geschwindigkeitsverlauf v(t) eine hohe Aufprallschwere erkennbar wird.

Wie der Figur 2 zu entnehmen ist, erfolgen die Übergänge der Schwellen GS, S1 und S2 von der minimalen Geschwindigkeit vmin auf die jeweiligen Maximalwerte vmaxgs, vmaxs1, vmaxs2 in Stufen. Die gestuften Steigungsverläufe sind deshalb gewählt, weil dadurch für die Schwellwertentscheidungen eine geringere Rechnerleistung erforderlich ist. Die Steigungsverläufe können aber ebenso auch kontinuierlich oder in einer erheblich größeren Anzahl von Stufen stattfinden, als in der Figur 2 dargestellt.

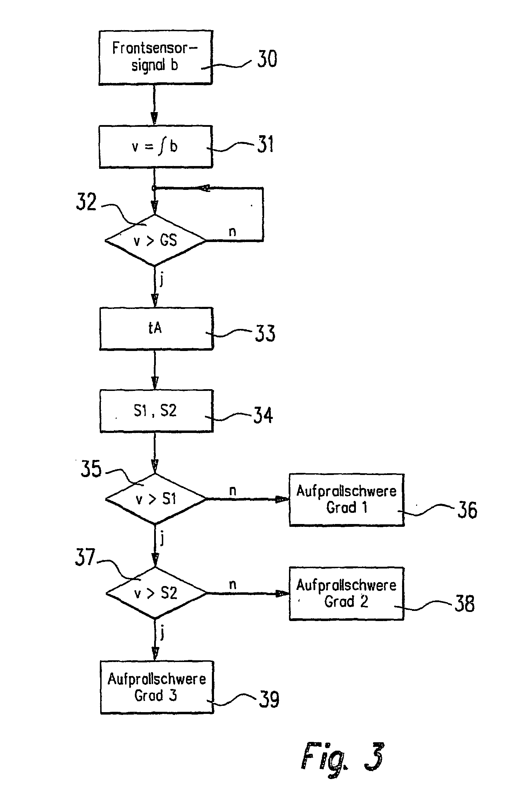

Anhand des Ablaufdiagramms in der Figur 3 wird nun die Herleitung verschiedener Aufprallschweregrade aus dem vom Frontsensor 4 gelieferten Meßsignal beschrieben. Im ersten Schritt 30 wird das Meßsignal des Frontsensors 4, welches die Verzögerung b des Fahrzeugs bei einem Frontaufprall wiedergibt, aufgenommen. Im nächsten Verfahrensschritt 31 wird das Integral der gemessenen Verzögerung b gebildet. Das Integral der Beschleunigung b ist die Geschwindigkeit v. In der Figur 2 sind beispielhaft zwei zeitabhängige Geschwindigkeitsverläufe v1(t) und v2(t) eingezeichnet, die bei verschieden schweren Aufprallen gemessen worden sind. Im dritten Schritt 32 wird die gemessene Geschwindigkeit v zuerst mit der Grundschwelle GS verglichen. Wird diese Grundschwelle GS von der gemessenen Geschwindigkeit v nicht überschritten, so soll es zu keiner Aulösung von Rückhaltemitteln kommen.

Wird allerdings die Grundschwelle GS von der gemessenen Geschwindigkeit v überschritten, wie das bei dem in der Figur 2 dargestellten Beispiel durch den Geschwindigkeitsverlauf v2(t) geschieht, wird der Zeitpunkt tA des Überschreitens der Grundschwelle GS im Schritt 33 bestimmt. In diesem Zeitpunkt tA werden im Schritt 34 die weiteren Schwellen S1 und S2 mit ihren unterschiedlichen Steigungen abgezweigt. Im darauffolgenden Schritt 35 wird die gemessene Geschwindigkeit v zunächst mit der mittleren Schwelle S1 verglichen. Übersteigt die Geschwindigkeit v diese Schwelle S1 nicht, so wird im Schritt 36 auf eine Aufprallschwere mit dem Grad 1 entschieden. Dieser Aufprallschweregrad 1 deutet auf einen Aufprall hin, bei dem z. B. Gurtstraffer aktiviert aber Airbags noch nicht ausgelöst werden sollen.

Wird allerdings die Schwelle S1 von der gemessenen Geschwindigkeit v überschritten, dann wird im nächsten Schritt 37 abgefragt, ob diese Geschwindigkeit v auch die Schwelle S2 überschreitet. Ist letzteres nicht der Fall, dann wird im Schritt 38 auf eine Aufprallschwere mit dem Grad 2 entschieden. Beim Aufprallschweregrad 2 werden neben Gurtstraffern bereits auch Airbags aktiviert. Und zwar werden die Airbags in diesem Fall mit einer geringeren Stärke aufgeblasen.

Stellt sich heraus, dass die gemessene Geschwindigkeit v auch die Schwelle S2 mit der größten Steigung überschreitet, dann wird im Schritt 39 auf eine Aufprallschwere vom Grad 3 entschieden. Hierbei handelt es sich um einen Aufprallschweregrad, der es erfordert, dass die vorhandenen Airbags mit der größten zur Verfügung stehenden Stärke aufgeblasen werden.

Soll zwischen mehr als nur drei Aufprallschweregraden differenziert werden, so kann die gemessene Geschwindigkeit v auch mehr als nur 3 Schwellwertentscheidungen unterzogen werden.

## Patentansprüche

1. Verfahren zum Ermitteln der Schwere eines Frontaufpralls bei einem Fahrzeug, wobei im Frontbereich des Fahrzeugs mindestens ein Frontsensor (4) installiert ist, der eine durch einen Aufprall entstehende Verzögerung mißt, aus der eine Information über die Aufprallschwere abgeleitet wird, **dadurch gekennzeichnet,**
- **dass** die gemessene Verzögerung oder die daraus durch Integration hergeleitete Geschwindigkeit (v) mit einer Grundschwelle (GS) verglichen wird, welche einen solchen zeitabhängigen Verlauf hat, dass sie von einer gemessenen Verzögerung/Geschwindigkeit (v) nicht überschritten wird, die bei einem Aufprall mit einer solchen Schwere gemessen wird, bei der die Rückhaltemittel im Fahrzeug gerade noch nicht ausgelöst werden sollen,
- **dass** mindestens eine weitere Schwelle (S1, S2) mit einer größeren Steigung als die der Grundschwelle (GS) gebildet wird, wobei diese weitere Schwelle (S1, S2) mit größerer Steigung dort von der Grundschwelle (GS) abzweigt, wo die Grundschwelle (GS) von der gemessenen Verzögerung/Geschwindigkeit (v) überschritten wird,
- und **dass** die Steigung der mindestens einen weiteren Schwelle (S1, S2) so gewählt wird, dass sie von der gemessenen Verzögerung/Geschwindigkeit (v) erst bei einer bestimmten Aufprallschwere überschritten wird.

2. Verfahren nach Anspruch 1, **dadurch gekennzeichnet, dass** soviele Schwellen (GS, S1, S2) mit unterschiedlichen Steigungen bereitgestellt werden, wie verschiedene Aufprallschweren voneinander unterschieden werden sollen.

3. Verfahren nach Anspruch 1, **dadurch gekennzeichnet, dass** die Grundschwelle (GS) so wie jede weitere Schwelle (S1, S2) ihren zeitlichen Verlauf zu Beginn eines Aufpralls mit demselben konstanten Minimalwert (vmin) beginnen und nach einer Zeitverzögerung (Δt), vorgegeben durch die jeweils zu ermittelnde Aufprallschwere, auf einen individuellen Maximalwert (vmaxgs, vmaxs1, vmaxs2) mit einer individuellen Steigung übergehen.

4. Verfahren nach Anspruch 3, **dadurch gekennzeichnet, dass** die einzelnen Schwellen (GS, S1, S2) vom Minimalwert (vmin) auf ihren Maximalwert (vmaxgs, vmaxs1, vmaxs2) in einem gestuften Steigungsverlauf übergehen.

## Claims

1. Method for determining the severity of a frontal impact in a vehicle, at least one front sensor (4) which measures a deceleration which occurs as a result of an impact and from which information about the severity of the impact is derived is installed in the frontal region of the vehicle, **characterized**
- **in that** the measured deceleration or the velocity (v) which is derived therefrom by integration is compared with a basic threshold (GS) which has such a time-dependent profile that it is not exceeded by a measured deceleration/velocity (v) which is measured when there is an impact with a severity such that the restraint means in the vehicle should just still not be triggered,
- **in that** at least one further threshold (S1, S2) is formed with a larger gradient than that of the basic threshold (GS), this further threshold (S1, S2) branching off with a larger gradient from the basic threshold (GS) at the point where the basic threshold (GS) is exceeded by the measured deceleration/velocity (v),
- and **in that** the gradient of the at least one further threshold (S1, S2) is selected such that it is exceeded by the measured deceleration/velocity (v) only when there is a specific severity of impact.

2. Method according to Claim 1, **characterized in that** as many thresholds (GS, S1, S2) with different gradients are made available as the number of different severities of impact which are to be differentiated from one another.

3. Method according to Claim 1, **characterized in that** the basic threshold (GS), like every other threshold (S1, S2), starts its time profile at the start of an impact with the same constant minimum value (vmin), and after a time delay (Δt), predefined by the severity of impact which is to be respectively determined, it changes over to an individual maximum value (vmaxgs, vmaxs1, vmaxs2) with an individual gradient.

4. Method according to Claim 3, **characterized in that** the individual thresholds (GS, S1, S2) change from the minimum value (vmin) to their maximum value (vmaxgs, vmaxs1, vmaxs2) in a stepped gradient profile.

## Revendications

1. Procédé d'identification de la force d'un impact frontal dans un véhicule, selon lequel on installe à l'avant du véhicule au moins un capteur frontal (4), qui mesure une décélération provoquée par un impact, laquelle permet d'en déduire une information sur la gravité de l'impact,
**caractérisé en ce que**
- la décélération mesurée ou la vitesse (v) déduite par intégration est comparée à un seuil de base (GS) qui a une évolution telle en fonction de la durée qu'il n'est pas dépassé par une décélération /vitesse (v) mesurée en cas d'impact avec une gravité telle que les moyens de retenue dans le véhicule ne doivent pas encore être déclenchés,
- au moins un autre seuil (S1, S2) est formé avec une pente plus grande que celle du seuil de base (GS), cet autre seuil (S1, S2) avec une pente plus grande étant dérivé du seuil de base (GS), quand le seuil de base (GS) est dépassé par la décélération /vitesse (v) mesurée,
- et la pente de l'au moins un autre seuil (S1, S2) est choisie de façon à ce qu'elle soit dépassée par la décélération /vitesse (v) mesurée uniquement pour une gravité d'impact déterminée.

2. Procédé selon la revendication 1,
**caractérisé en ce que**
on prévoit autant de seuils (S1, S2) avec des pentes différentes qu'il peut y avoir de gravités d'impact différentes.

3. Procédé selon la revendication 1,
**caractérisé en ce que**
le seuil de base (GS) ainsi que chacun des autres seuils (S1, S2) commencent leur évolution temporelle au début d'un impact avec la même valeur minimale constante (vmin) et, après une temporisation (Δt) prédéterminée par la gravité d'impact respective à déterminer, passent sur une valeur maximale individuelle (vmaxgs, vmaxs1, vmaxs2) avec une pente individuelle.

4. Procédé selon la revendication 3,
**caractérisé en ce que**
les seuils individuels (GS, S1, S2) passent de la valeur minimale (vmin) à leur valeur maximale (vmaxgs, vmaxs1, vmaxs2) selon une pente par paliers.
